# EUROPEAN PATENT SPECIFICATION

(11) **EP 0 903 677 B1**
(45) Date of publication and mention of the grant of the patent: **11.12.2002**
(21) Application number: 98307549.0
(22) Date of filing: 17.09.1998
(51) Int. Cl.: G06F 17/30, G06F 17/21

(54) **Hypertext editing system**
Hypertext-Editiersystem
Système d'édition d' hypertexte

(30) Priority: 22.09.1997 JP 25632897
(43) Date of publication of application: 24.03.1999
(73) Proprietor: Matsushita Electric Industrial Co., Ltd., Kadoma-shi, Osaka 571-0050 (JP)
(72) Inventor: Nakanishi, Yoshiaki, Suginami-ku, Tokyo 166-0014 (JP); Sakushima, Kazuo, Takatsu-ku, Kawasaki 213-0001 (JP); Inoue, Kazunori, Nerima-ku, Tokyo 179-0085 (JP); Kawaguchi, Kyoko, Matsudo-shi, Chiba-ken 271-0093 (JP)
(74) Representative: Dempster, Benjamin John Naftel

(56) References cited:
- EP-A- 0 319 232
- EP-A- 0 696 003
- PATENT ABSTRACTS OF JAPAN vol. 1995, no. 01, 28 February 1995 (1995-02-28) & JP 06 301676 A (FUJI XEROX CO LTD), 28 October 1994 (1994-10-28)
- PATENT ABSTRACTS OF JAPAN vol. 1995, no. 05, 30 June 1995 (1995-06-30) & JP 07 036890 A (CANON INC), 7 February 1995 (1995-02-07)

## Description

The present invention relates to a data editing system using computer, and in particular to a system for editing data of hypertext form (e.g. for editing contents of WWW).

As a means for describing hypertext information, in which the entire information is provided with a form of hypertext comprising a set of nodes and links and is given and taken using a computer network, HTML (HyperText Markup Language) standardized by IETF (The Internet Engineering Task Force) is often used. HTML is a description language based on SGML (Standardized Generalized Markup Language) defined by ISO 8879:1986. HTML is a type of page description language, which can handle each page as a node. An identifier uniquely allocated to each node in advance can be used for the link between nodes, and reference source and reference destination can be described at any position in the page. Link information serves only for reference and has no information relating to semantic association between nodes.

A page described by HTML is used to share and provide information on TCP/IP network (transmission control protocol/internet protocol), i.e. on Internet or Intranet. The above means for sharing and providing information is generally called WWW (World Wide Web).

Hypertext is a common type data base mode of computer, and a great number of means have been proposed to control and manage documents of hypertext form.

Hypertext document has high degree of freedom to the association between nodes, and it is characterized in that information structure of a document can be designed in different forms, whereas link structure tends to be complicated, and serious problem may arise that the control of association becomes difficult as number of nodes increases.

In case a shared information using hypertext document is to be updated, the above problem causes such a difficulty that mismatching occurs between a document and information in another document referring to it when the document is updated. In addition, in case a group of hypertext documents is simultaneously edited by a plurality of users, reference relationship in each document may be destroyed.

Also, when a plurality of persons attempt to edit the same document at the same time, problem may arise that a part of the result of editing may be lost.

To improve the problems arising when hypertext document is handled as described above, several technical methods have been proposed in the past. Some examples are given below.

A first prior art is as follows:

In the technique disclosed in JP-A-6-301676, when a document is edited under cooperation of a plurality of users, editing intention of each user is identified, and this is presented to the other users. In this technique, however, no consideration is given on a case where these users edit at the same time. That is, when editing is performed at the same time and contradiction occurs in each of the data, there is no description as to what kind of action should be taken.

A second prior art is as follows:

In the technique disclosed in JP-A-7-36890, it is aimed to prevent destruction of a content shared by a plurality of document elements when such content may be erroneously destroyed by editing of one document element. If this technique is adopted in addition to the first prior art, it is possible to prevent data contradiction, but this can provide only a function to identify which part of the document is the shared content, and there is no restriction as to what kind of editing is allowed for the shared portion, -and there is no disclosure about the content of editing.

A third prior art is as follows:

In the technique disclosed in JP-A-8-63462, the time of updating and the time to identify document for each user are maintained in partial units of the document. The document can be handled by partial units, and it is possible to acquire updating information of the document at the partial unit. In this technique, however, consideration is given only on a case where reference is made, and not on a case where editing is performed.

All of these prior art techniques relate to improvement of sharing of information in case of document change by a plurality of users or of sharing of the same content in a plurality of documents. In the first prior art, however, no consideration is given on simultaneous editing by a plurality of users, and there is a problem in that, when editing is performed on the same portion at the same time, there may be difficulty in transmitting editing intention to each other. In the second prior art, when a shared information is to be edited, the user must judge whether such editing is allowable or not

EP-A-319232 discloses a system providing exclusivity to invoked changes to parts of shared structural data objects accessible by multiple users in a real-time environment. One or more data entries can be locked up by an individual user, thereby preventing access to the locked entries by other users, to prevent concurrent editing and other changes to the same entries by two or more users.

To solve the above problems, it is a first object of the present invention to provide a means in the editing of hypertext documents, by which it is possible to perfectly and safely edit hypertext documents associated with each other by a plurality of users without causing contradiction in their relationship.

Further, it is a second object of the present invention to provide a means in editing of a hyperlink information in a hypertext document, by which it is possible to perfectly and safely edit a hyperlink information in cooperation with the editing of the hypertext document associated with the hyperlink.

To attain the first object, it is proposed as follows:

When a hypertext document is to be edited, a system is provided to guarantee content and presence of each document to a document to be edited and to a group of documents related in hyperlink relationship. An information on priority is added to a set of information of a document group related with the documents to be edited in hyperlink relationship so that this makes it possible to control editing sequence of the documents to be edited and to execute exclusive editing.

To attain the second object, it is proposed as follows:

In case hyperlink information in a hypertext document is to be edited, a system is provided to guarantee content and presence of the hyperlink according to locking condition of the hypertext associated with the hyperlink to be edited. This makes it possible to perfectly and safely edit the hyperlink information.

These and other objects and features of the present invention will become more readily apparent from the following detailed description taken in conjunction with the accompanying drawings in which:
Fig. 1 is a block diagram of a hypertext editing system according to a first embodiment of the present invention;
Fig. 2 represents an example of hierarchical structure of the first embodiment;
Figs. 3A and 3B represent a grammar and an example of the hierarchical structure of the first embodiment;
Figs. 4A and 4B represent an example of control unit information and locking control in the first embodiment;
Fig. 5 is a block diagram of a hypertext editing system according to a second embodiment;
Figs. 6A and 6B show an example of locking control in the second embodiment;
Fig. 7 is a block diagram of a hypertext editing system according to a third embodiment;
Figs. 8A and 8B show an example of locking control in the third embodiment;
Fig. 9 is a block diagram of a hypertext editing system according to a fourth embodiment;
Figs. 10A and 10B shows an example of locking control in the fourth embodiment;
Fig. 11 is a block diagram of a hypertext editing system according to a fifth embodiment; .
Figs. 12A and 12B show an example of locking control in the fifth embodiment;
Fig. 13 is a block diagram of a hypertext editing system according to a sixth embodiment;
Figs. 14A to 14C show an example of locking control in the sixth embodiment;
Fig. 15 is a block diagram of a hypertext editing system according to a seventh embodiment;
Figs. 16A and 16B shows an example of locking control in the seventh embodiment;
Fig. 17 is a block diagram of a hypertext editing system according to an eighth embodiment;
Figs. 18A and 18B show an example of locking control in the eighth embodiment;
Fig. 19 is a block diagram of a hypertext editing system according to a ninth embodiment;
Fig. 20 shows an example of hyperlink relationship on the ninth embodiment;
Figs. 21A and 21B show a grammar and an example of hyperlink information in the ninth embodiment;
Fig. 22 shows an example of component elements of control unit information in the first embodiment;
Fig. 23 shows an example of component elements of control unit information in the second embodiment;
Fig. 24 shows an example of component elements of control unit information in the third embodiment;
Fig. 25 shows an example of component elements of control unit information in the fourth embodiment; and
Fig. 26 shows an example of component elements of control unit information in the fifth embodiment;

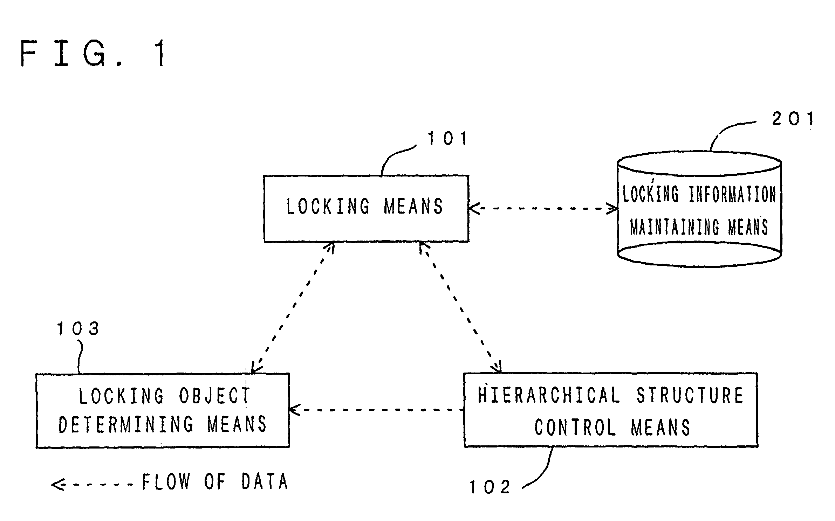

In the following, description will be given on embodiments of the present invention referring to Fig. 1 to Fig. 26. It is needless to say that the present invention is not limited to these embodiments, and various changes and modifications can be made without departing from the spirit and the scope of the claims attached hereto.

### (First Embodiment)

Description will be given now on a first embodiment of the present invention referring to Figs. 1 to 4 and 22.

Fig. 1 is a block diagram showing an example of a hypertext document editing system in the present embodiment. This system comprises a computer unit and a software, and the system also comprises input means such as keyboard, pointing device, network device, etc. possessed by the computer unit, and internal status of the system is presented to users via output means such as display device and the like possessed by the computer unit.

A hierarchical structure control means 102 is a partial unit for controlling hyperlink relationship information where parent-children order is introduced in hyperlink relationship between node information of each node in the hypertext and nodes, and a locking object determining means 103 is a partial unit to determine a node group to be locked according to hyperlink relationship information under the control of the hierarchical structure control means 102 and from a locking object determining rule. To a specific node specified by input and to a node group determined by the locking object determining means 103, a locking means 101 performs locking to guarantee exclusive editing using a locking information maintaining means 201. It is a partial unit for referring to a specific node information from the hierarchical structure control means 102, and after new preparation, deletion and change, the result is registered to the hierarchical structure control means. The locking information maintaining means 201 is a partial unit to maintain an information of a node group requested by the locking means 101.

Description is now given on flow of processing in the present embodiment.

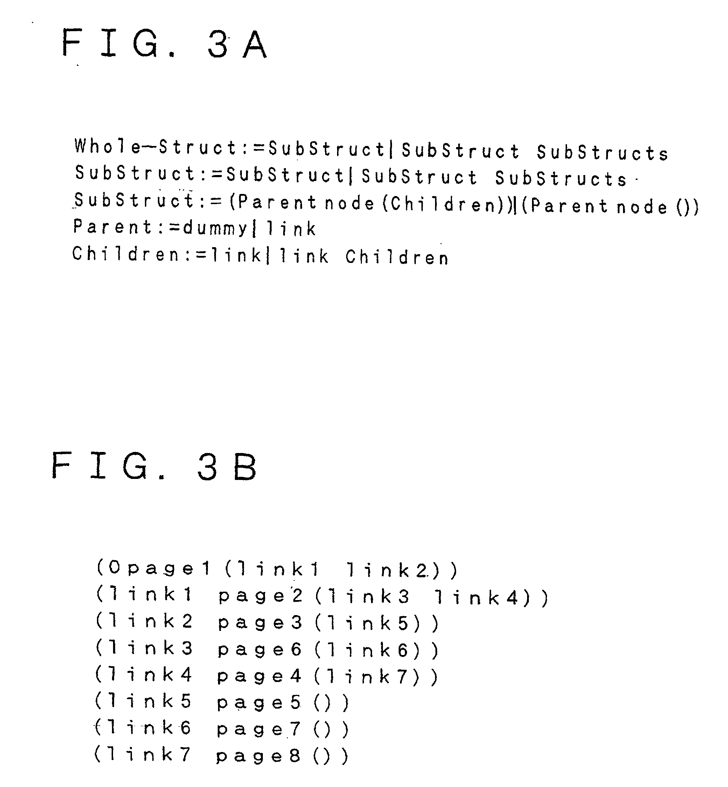

Fig. 3A represents a context free grammar to describe structural information handled by the hierarchical structure control means 102. All of the structural information are expressed by an expanded system of Whole-Structs. In the figure, a symbol "SubStructs" represents a non-terminal symbol to express a set of parent-children relationship of a node, a symbol "SubStruct" represents a non-terminal symbol to express parent-children relationship of a node, a symbol "Parent" is a non-terminal symbol to express a parent hyperlink, a symbol "node" is a terminal symbol to express an identifier to uniquely specify a node, a symbol "link" represents a terminal symbol to express an identifier to uniquely specify a hyperlink, a symbol "dummy" represents a terminal symbol to express a number, which means that the parent hyperlink is not present, and a symbol "Children" represents a non-terminal symbol to express a set of hyperlinks. Further, in the above grammar, a bracket opening symbol and a bracket closing symbol are used as terminal symbols. Structure is expressed by a terminal symbol string in accordance with the above grammar. It is supposed that SubStruct corresponding to a specific node is present on one-to-one basis.

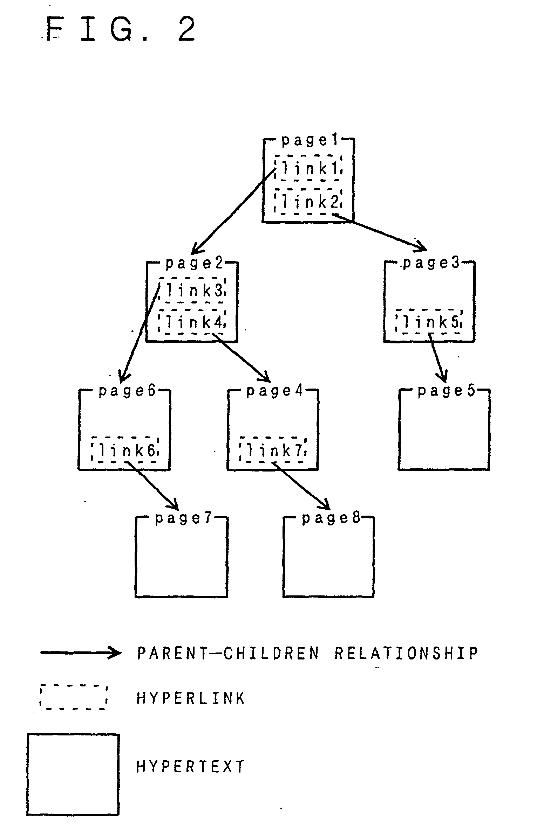

Fig. 2 shows an example of structure between nodes, The structure between nodes in Fig. 2 is shown in Fig. 3B using the above context grammar. It is assumed that a number expressing that there is no parent hyperlink is 0.

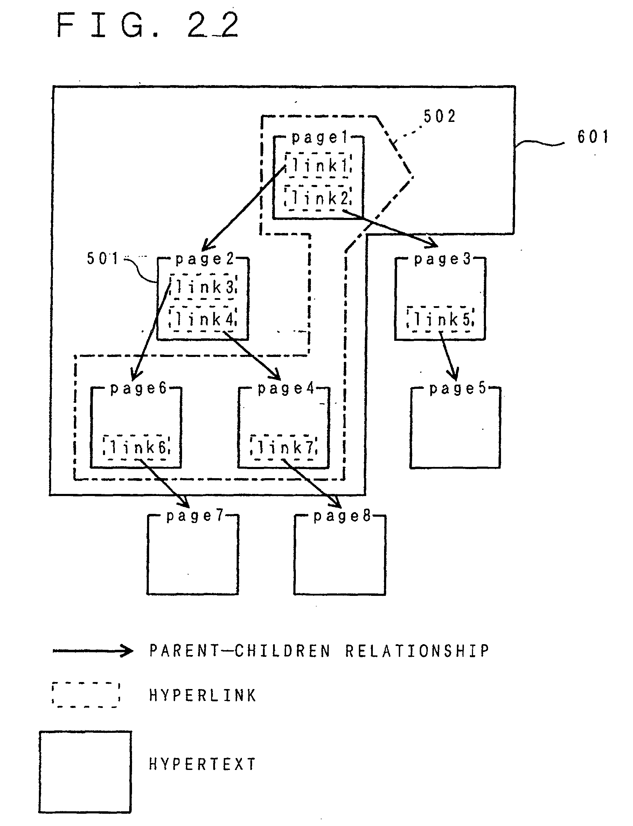

Fig. 22 shows an example of a node group 502 in case "page 2" in Fig. 2 is supposed to be a node 501 and such a rule is used that an adjacent node group is to be locked.

The locking means 101 sends an information of the node 501 specified by an input to the locking object determining means 103 and requests to determine the node group to be locked. Upon receipt of the request, the locking object determining means 103 refers to the information of the acquired node and also to the information on the hyperlink relationship under the control of the hierarchical structure control means 102 and determines the node group to be locked 502.

The locking means 101 acquires the node group to be locked 502 from the locking object determining means 103 and generates an association information to the information of the node 501 and the node group to be locked 502. To the association information, a priority information to show an order of editing processing is added and it is turned to a control unit information. For example, it is assumed that the information of the node 501 and the node group 502 are component elements of a control unit information 601.

The information of the node 501 and the information of the node group 502 are registered to the locking status maintaining means 201. When the priority retained by the control unit information 601 is-at a status showing the maximum priority, the node 501 is edited. Upon completion of the node 501, the information of the node 501 and the node group 502 associated in the control unit information 601 are exempted from the locking status maintaining means 201 at the same time, and the control unit information 601 is deleted. With the deletion of the control unit information 601, priority information possessed by the other control unit information is corrected. It is also possible to use a rule to acquire a node group other than the adjacent node group as the node group to be locked.

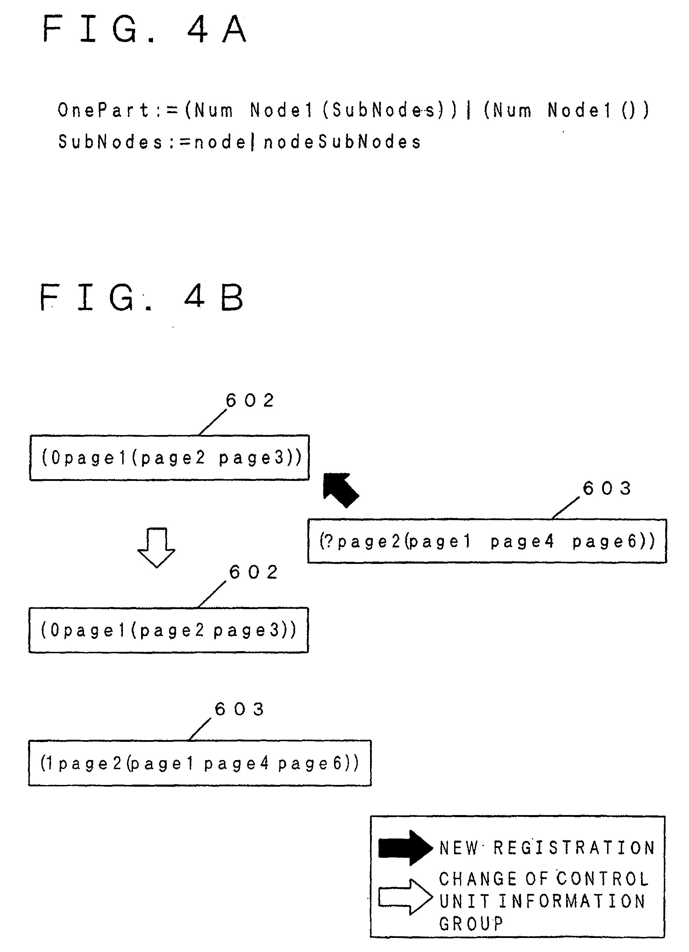

Fig. 4A represents a context free grammar to describe each control unit information. One control unit information is expressed by an expanded system of "OnePart". In the figure, a symbol "Num" represents a terminal symbol to express a number of priority, a symbol "Node1" represents a terminal symbol to express a number to uniquely specify a node to be edited. A symbol "SubNodes" represents a non-terminal symbol to express a set of any number of nodes to be locked related to "Node1", and a symbol "node" represents a terminal symbol to express a number to uniquely specify the node to be locked. Further, in the above grammar, a bracket opening symbol and a bracket closing symbol are. used as terminal symbols. Control unit is expressed in a terminal symbol string in accordance with the above grammar.

The priority information is given by a number, and this number indicates that the priority decreases as the number increases from 0 which is regarded as the highest priority. When a new control unit information (control unit information A) is registered, and if information of the node to be edited and the node group to be locked, serving as component elements of the control unit information A, is included in a control unit information (control unit information B) already registered in the locking means 101, the priority information of the control unit information A is set to lower than the priority information of the control unit information B. Also, it is assumed that the control unit information B has the lowest priority among the control units including information of the node to be edited and the node group to be locked, which are component elements of the control unit information A. For example, by checking from the information with the lowest priority to the information with higher priority, it is possible to extract the desired information. When editing of node is completed, the control unit information corresponding to the node is deleted from the locking means 101, and related information is deleted from the locking information maintaining means 201. In this case, all of the priority information of the control unit information maintained by the locking means 101 are calculated again.

Fig. 4B shows an example of state transition of the control unit information in case of page editing using the control unit information expressed by context free grammar of Fig. 4A. More concretely, it indicates state transition when a request to edit page 2 has been given in case page 1 in Fig. 2 is being edited. Here, it is supposed that the control unit corresponding to an editing node "page 1" is 602, and a control unit corresponding to an editing node "page 2" is 603. If a rule is used, which selects an adjacent node group of the editing node similarly to Fig. 22 as a node group to be locked corresponding to the editing node, the control unit information 602 comprises the editing node "page 1", the node groups, i.e. page 2 and page 3 to be locked, and the priority information. The control unit information 603 comprises the editing node "page 2", the node group to be locked, i.e. pages 1, page 4, and pages 6, and the priority information. In this case, the control unit information 602 to page 1, which is already in editing state, has 0 as the priority information. In case editing of page 2 is requested, new registration is performed to the locking means 101 of the control unit information 603. Because the node to be edited, i.e. page 2, retained by the control unit information 603 is included in the control unit information 602, priority information of the control unit information 603 is set to lower than the priority information of the control unit information 602.

As described above, it is proposed in the present embodiment as follows:

It is not only that a locking mode not executed in the past is adopted as a method to avoid data contradiction during editing, but that a range of locking is limited by taking note of a tree structure of the hypertext (or speaking reversely, the range of editing is extended because infinite range is not locked). Or, if viewed from the arrangement, it is as follows:

The hyperlink relationship is controlled by the hierarchical structure control means 102, and the optimal range for the locking object is determined by the locking object determining means 103.

It is possible to edit the hypertext document to be edited in a state where it is guaranteed that the contents of the hypertext document to be edited and the other hypertext documents are not changed and that these documents are present, and its effect in practical application is high.

### (Second Embodiment)

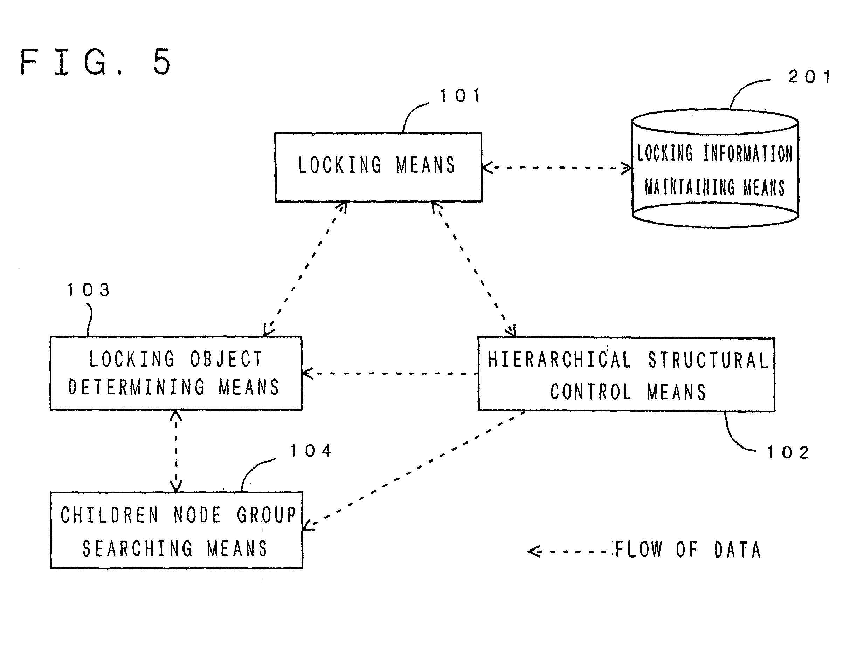

Description will be given below on a second embodiment of the invention referring to Figs. 5, 6 and 23.

Fig. 5 is a block diagram showing an example of a hypertext document editing system according to the present embodiment. In this embodiment, a children node group searching means 104 is added to the system shown in the first embodiment (Fig. 1).

In the flow of processing in the above system, a processing using the children node group searching means 104 is added so that the locking object determining means 103 determines the node group to be locked in the flow of processing shown in the first embodiment. When the node to be edited 501 is specified, the locking means 101 notifies an information of the node 501 to the locking object determining means 103. The locking object determining means 103 transmits an information of the specified node 501 to the children node group searching means 104. The children node group searching means 104 determines a children node group 503 from the information of the node 501 and the hierarchical structure control means 102, and the information is transmitted to the locking object determining means 103. The locking object determining means 103 handles the children node group 503 as the node group to be locked.

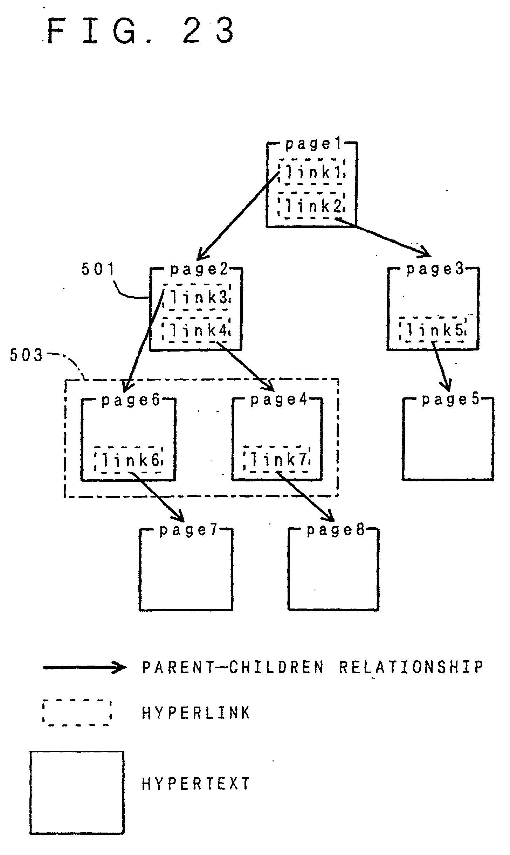

Fig. 23 shows an example of the children node group 503 in case page 2 is supposed to be the node 501.

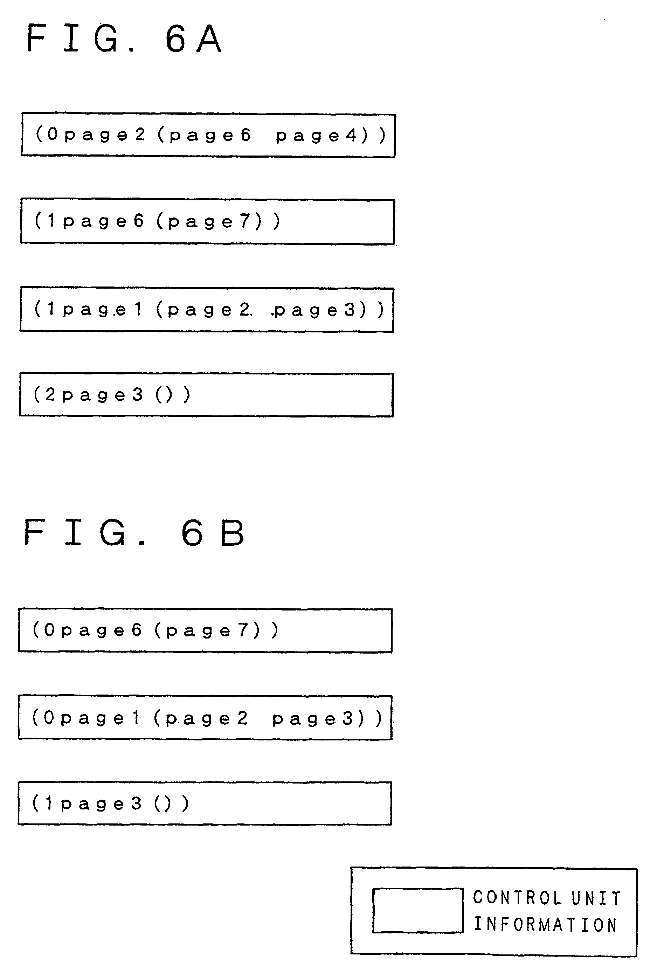

Figs. 6A and 6B show an example of a locking state in the hierarchical structure shown in Fig. 2. Fig. 6A represents a state of a control unit information group corresponding to page 2, page 6, page 1, and page 3 in case it is requested to edit in the order of page 2, page 6, page 1, and page 3. Fig. 6B represents a state of the control unit information group immediately after the completion of editing of page 2. This is different from the procedure explained in Fig. 4B of the first embodiment in that the range of the node group to be locked is changed.

As described above, according to the present embodiment, it is possible to edit the hypertext document to be edited in a state where it is guaranteed that the content of the children hypertext document associated with the hypertext document to be edited by a link, i.e. a semantic parent-children relationship, is not changed and it is present, and its effect in practical application is high.

### (Third Embodiment)

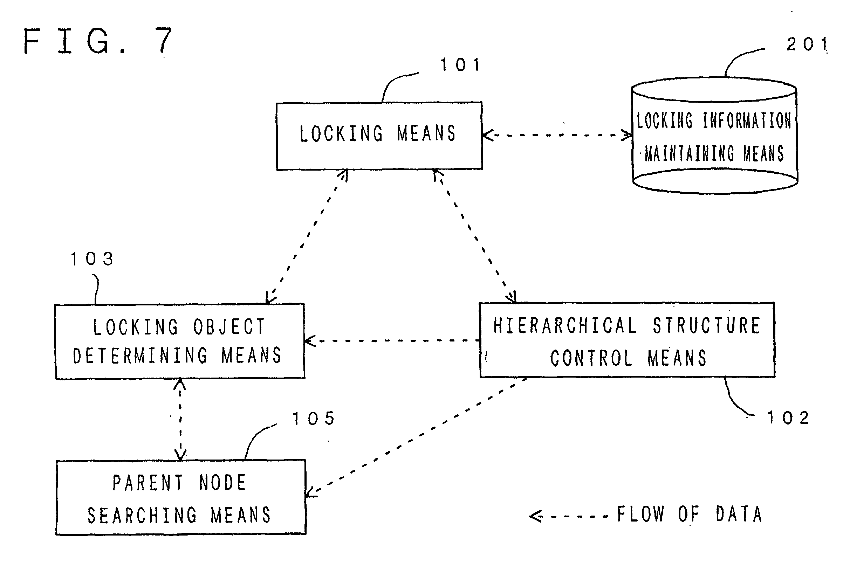

Description will be given now on a third embodiment referring to Figs. 7, 8 and 24.

Fig. 7 is a block diagram showing an example of a hypertext document editing system according to the present embodiment. In this system, a parent node searching means 105 is added to the system shown in the first embodiment (Fig. 1).

In the flow of processing in the above system, a processing is added, in which the locking object determining means 103 uses the parent node searching means 105 in the flow of processing shown in the first embodiment. When the node to be edited 501 is specified, the locking means 101 notifies an information of the node 501 to the locking object determining means 103. The locking object determining means 103 transmits an information of the specified node 501 to the parent node searching means 105. The parent node searching means 105 determines the parent node 504 from the information of the node 501 and by the hierarchical structure control means 102, and transmits the information to the locking object determining means 103. The locking object determining means 103 performs exclusive editing with the parent node 504 as a locking object.

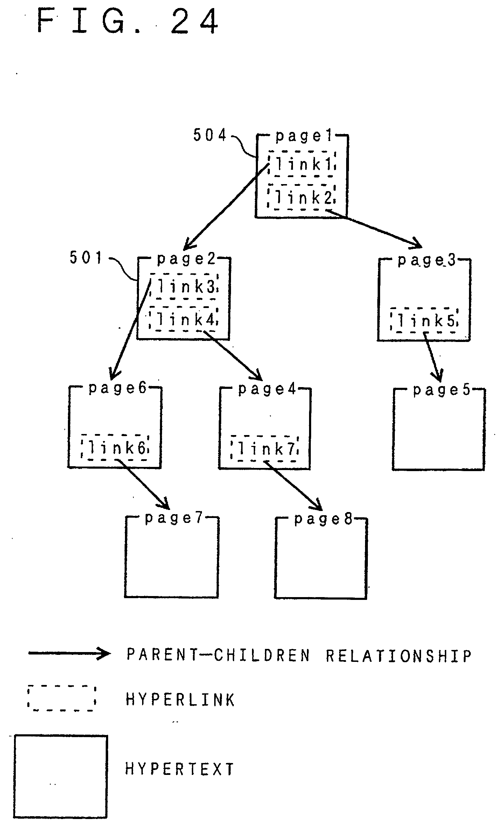

Fig. 24 shows an example of the parent node 504 in case it is supposed that page 2 is the node 501.

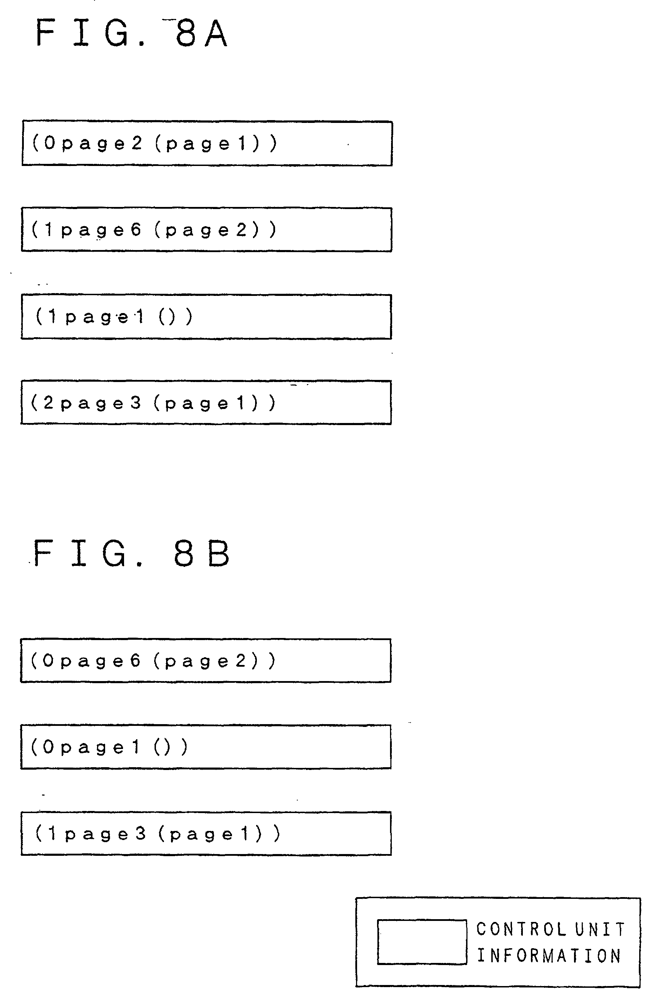

Figs. 8A and 8B represent a locking state in the hierarchical structure shown in Fig. 2. Fig. 8A represents a state of a control unit information group corresponding to page 2, page 6, page 1, and page 3 in case editing is requested in the order of page 2, page 6, page 1, and page 3. Fig. 8B represents a state of the control unit information group immediately after the completion of editing of page 2 in Fig. 8A. This is different from the procedure explained in Fig. 4B of the first embodiment in that the range of the node group to be locked is changed.

As described above, according to the present invention, it is possible to edit the hypertext document to be edited in a state where it is guaranteed that the content of the parent hypertext associated with the hypertext document to be edited by a link, i.e. a semantic parent-children relationship, is not changed and it is present, and its effect in practical application is high.

It is needless to say that, by combining the embodiments 2 and 3, it is possible to edit the hypertext documents not in parent-children relationship in a state where content and presence of the hypertext documents associated by a link, i.e. semantic parent-children relationship, are fixed without causing contradiction in the association due to the link, and its effect in practical application is further extended.

### (Fourth Embodiment)

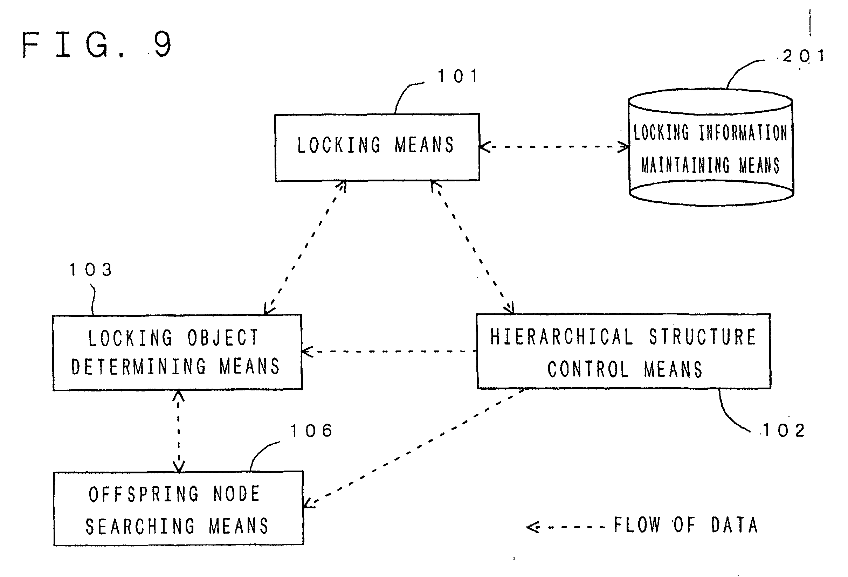

Description will be given now on a fourth embodiment referring to Figs. 9, 10 and 25.

Fig. 9 is a block diagram of an example of a hypertext document editing system according to the present embodiment. In this embodiment, an offspring node group searching means 106 is added to the system shown in the first embodiment (Fig. 1).

In the flow of processing in the above system, a processing is added, in which the locking object determining means 103 uses the offspring node searching means 160 in the flow of processing shown in the first embodiment. When a node to be edited 505 is specified, the locking means 101 notifies an information of the node to the locking object determining means 103. The locking object determining means 103 transmits the information of the specified node 505 to the offspring node group searching means 106. The offspring node group searching means 106 determines an offspring node group 506 from the information of the node 505 and by the hierarchical structure control means 102 and transmits the information to the locking object determining means 103. The locking object determining means 103 performs exclusive editing with the offspring node group 506 as a locking object.

The number of generations of the offspring node group is 2 or more, and it is defined for each system.

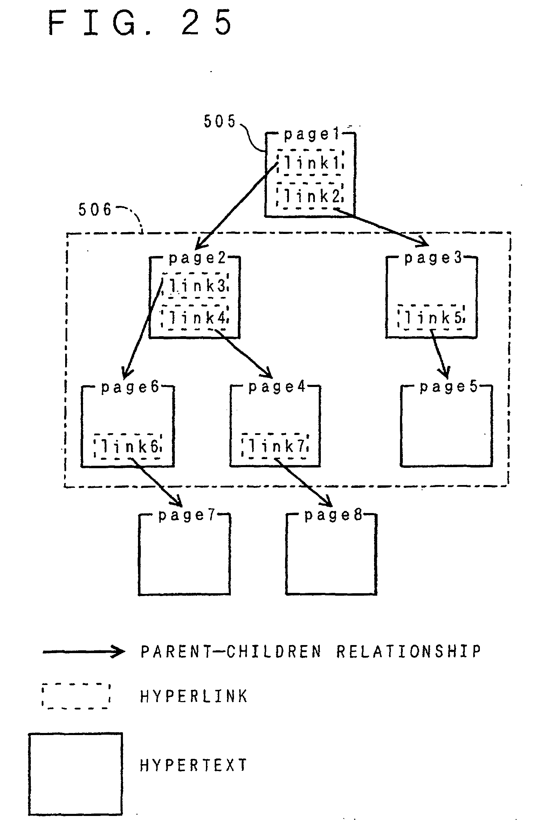

Fig. 25 shows an example of the offspring node group 506 in case it is supposed that page 1 is the node 505. Here, number of generations is limited to 2.

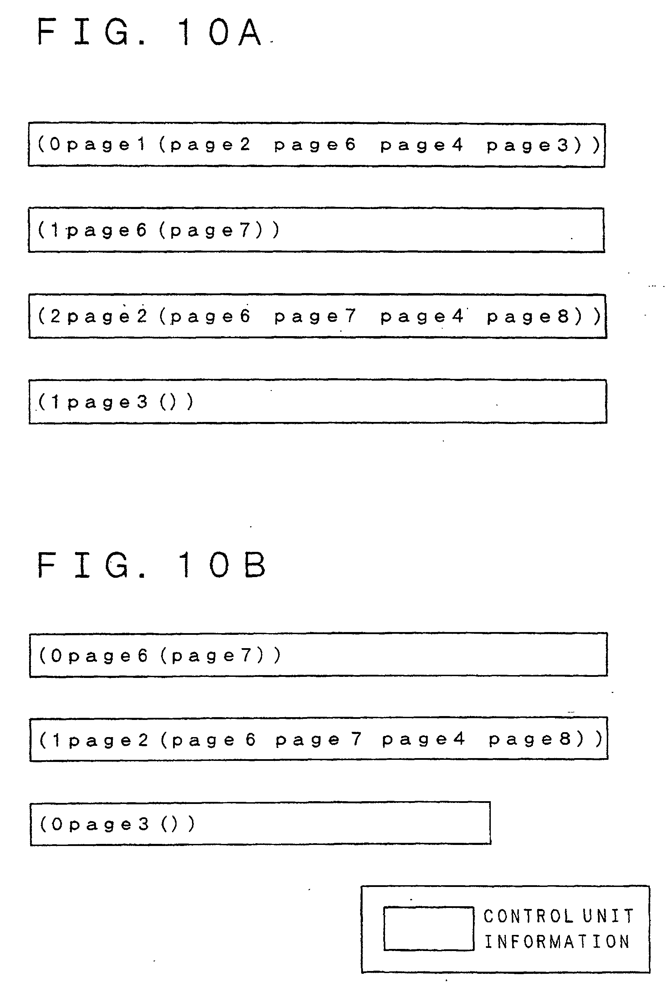

Figs. 10A and 10B represent an example of a locking state in the hierarchical structure shown in Fig. 2 in case the number of generations of the offspring node group searched by the offspring node searching means 106 is 2 generations. Fig. 10A represents a state of a control unit information group corresponding to page 1, page 6, page 2, and page 3 in case editing is requested in the order of page 1, page 6, page 2, and page 3. Fig. 10B represents a state of the control unit information group immediately after the completion of editing of page 1 in Fig. 10A. This is different from the procedure explained in Fig. 4B of the first embodiment in that the range of the locking object node group is changed.

As described above, according to the present embodiment, it is possible to edit the hypertext document to be edited in a state where it is guaranteed that the content of the offspring hypertext document of the defined number of generation and associated with the hypertext document to be edited by a link, i.e. semantic parent-children relationship, is not changed, and that it is present, and its effect in practical application is high.

### (Fifth Embodiment)

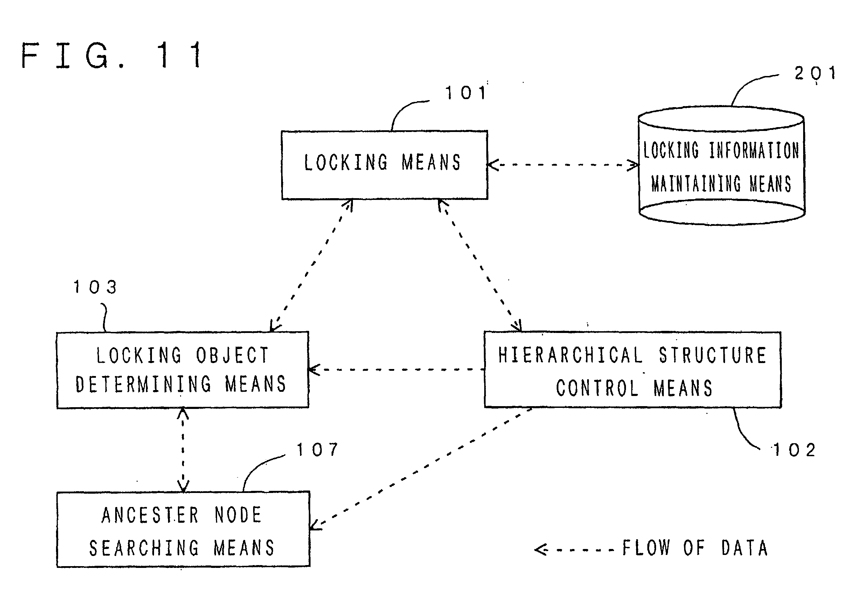

Description will be given now on a fifth embodiment referring to Figs. 11, 12 and 26.

Fig. 11 is a block diagram of an example of a hypertext document editing system in the present embodiment. In this system, an ancestor node searching means 107 is added to the system shown in the first embodiment (Fig. 1).

In the flow of processing in the above embodiment, a processing is added, in which the locking object determining means 103 uses the ancestor node searching means 107 in the flow of processing shown in the first embodiment. When the node to be edited 507 is specified, the locking means 101 notifies an information of the node 507 to the locking object determining means 103. The locking object determining means 103 transmits the information of the specified node 501 to the ancestor node searching means 107. The ancestor node searching means 107 determines an ancestor node group 508 from the information of the node 507 and by the hierarchical structure control means 102 and transmits the information to the locking object determining means 103. The locking object determining means 103 performs exclusive editing with the ancestor node group 508 as a locking object.

The number of generation of the ancestor node group is 2 or more, and it is defined for each system.

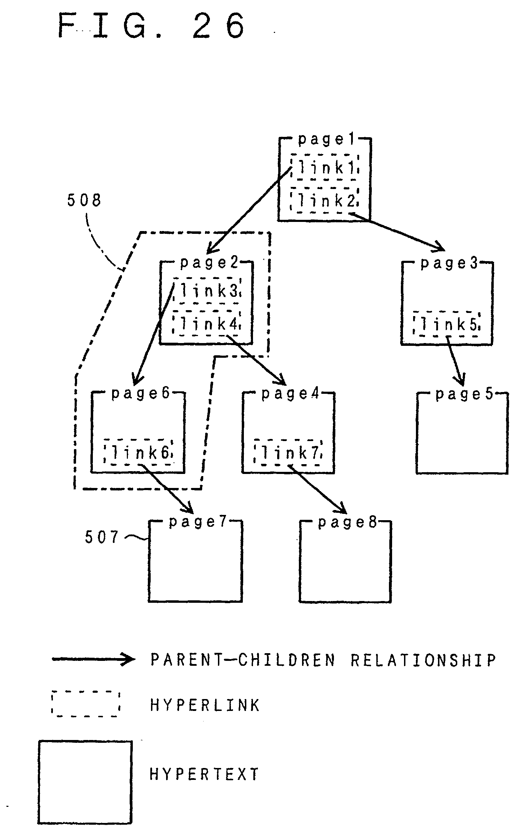

Fig. 26 represents an example of the ancestor node group 508 in case it is supposed that page 7 is the node 507. Here, the number of generations is limited to 2.

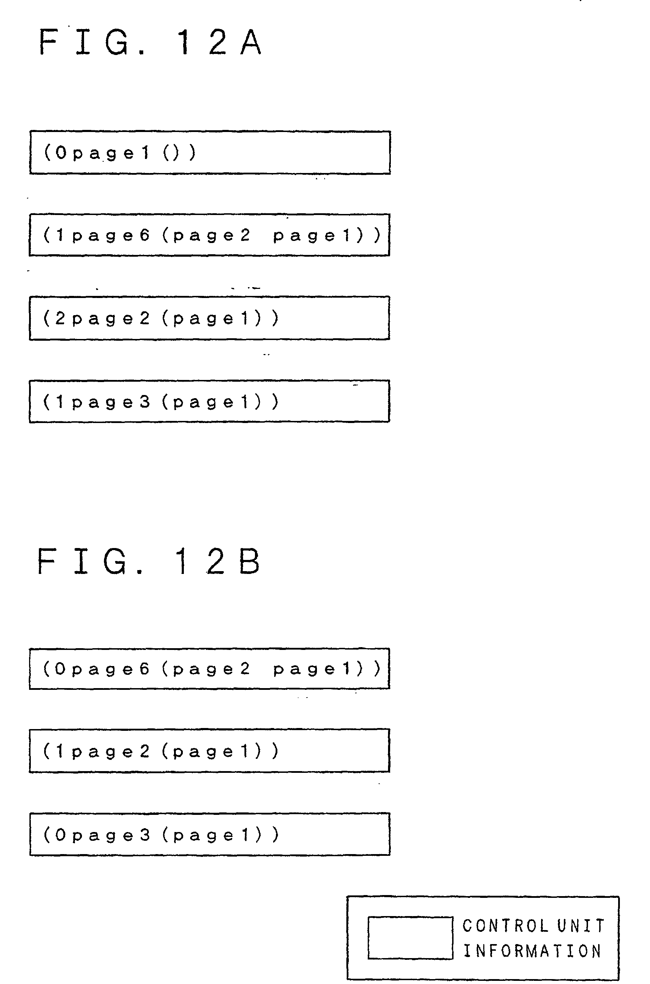

Figs. 12A and 12B represents a locking state in the hierarchical structure shown in Fig. 2 in case number of generations of the offspring node group searched by the offspring node searching means 106 is 2 generations. Fig. 12A represents a state of a control unit information group corresponding to page 1, page 6, page 2, and page 3 in case editing is requested in the order of page 1, page 6, page 2, and page 3. Fig. 12B represents a state of the control unit information group immediately after the completion of editing of page 1 in Fig. 12A. This is different from the procedure explained in Fig. 4B of the first embodiment in that the range of the node group to be locked is changed.

As described above, according to the present embodiment, it is possible to edit the hypertext document to be edited in a state where it is guaranteed that the content of the ancestor hypertext document of the defined number of generations and associated with the hypertext document to be edited by a link, i.e. a semantic parent-children relationship, is not changed and that it is present, and its effect in practical application is high.

### (Sixth Embodiment)

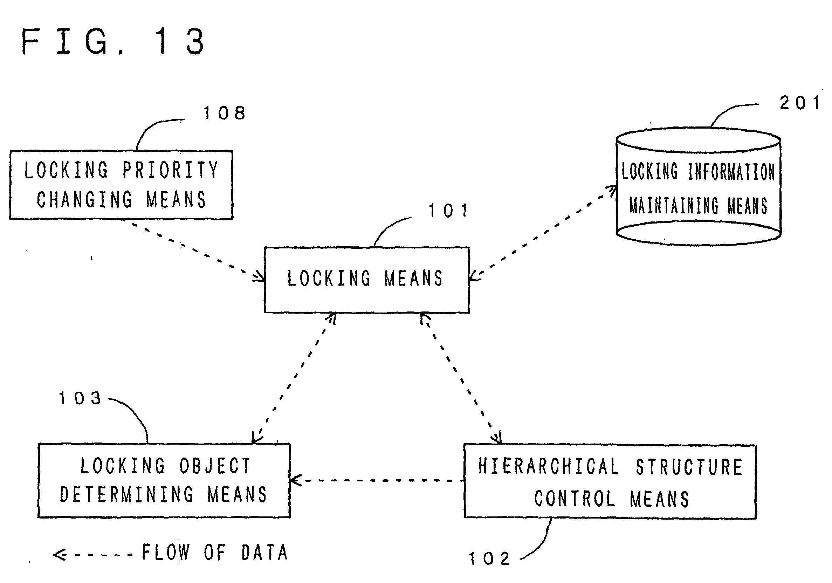

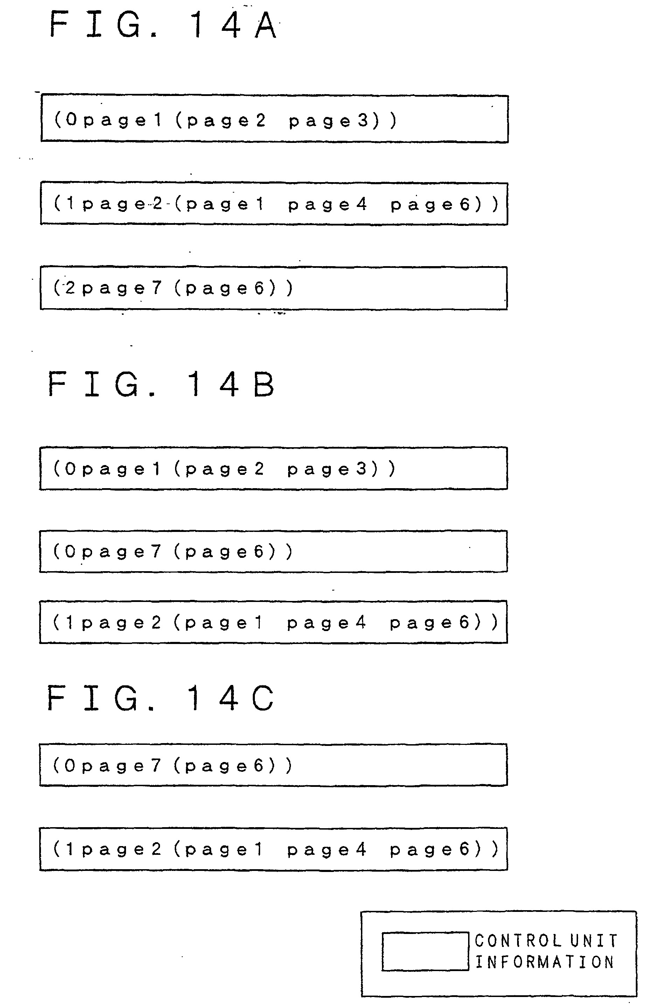

Description will be given below on a sixth embodiment referring to Fig. 13 and Figs. 14A to 14C.

Fig 13 is a block diagram showing an example of a hypertext document editing system according to the present embodiment. In this system, a locking priority changing means 108 is added to the system shown in the first embodiment (Fig. 1).

In the flow of processing in the above system, it is designed in such manner that the locking priority changing means 108 can change the order of locking processing under the control of the locking means 101 in the flow of processing shown in the first embodiment.

Figs. 14A to 14C show an example of a locking state in the hierarchical structure shown in Fig. 2. Fig. 14A represents a state of a control unit information group corresponding to page 1, page 2, and page 7 in case editing is requested in the order of page 1, page 2, and page 7. Fig. 14B represents a state where the priority of the control unit information including page 7 is raised to higher than that of the control unit information including page 2. As a result, priority information of the control unit information including page 7 as re-calculated is turned to 0, and it is possible to edit page 7. Fig. 14C represents a state of the control unit information immediately after the completion of editing of page 1. It represents a state of the control unit information group immediately after the completion of editing of page 2 according to the control unit information.

The above example indicates that, by the change of priority of control unit information, it is possible to decrease the waiting state of the entire node editing.

As described above, according to the present embodiment, it is possible to edit with the priority the hypertext document requiring urgent processing and to-decrease waiting state of the entire editing operation, and its effect in practical application is high.

### (Seventh Embodiment)

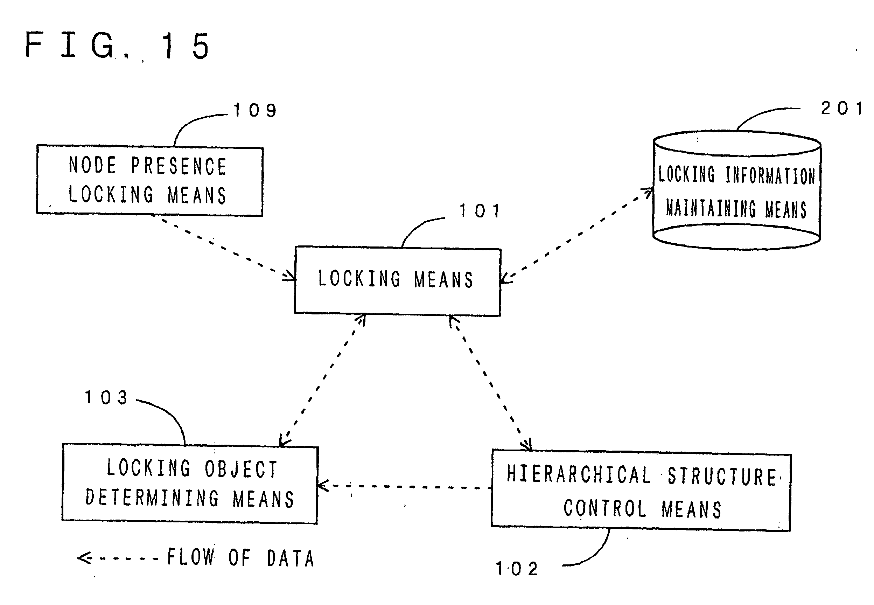

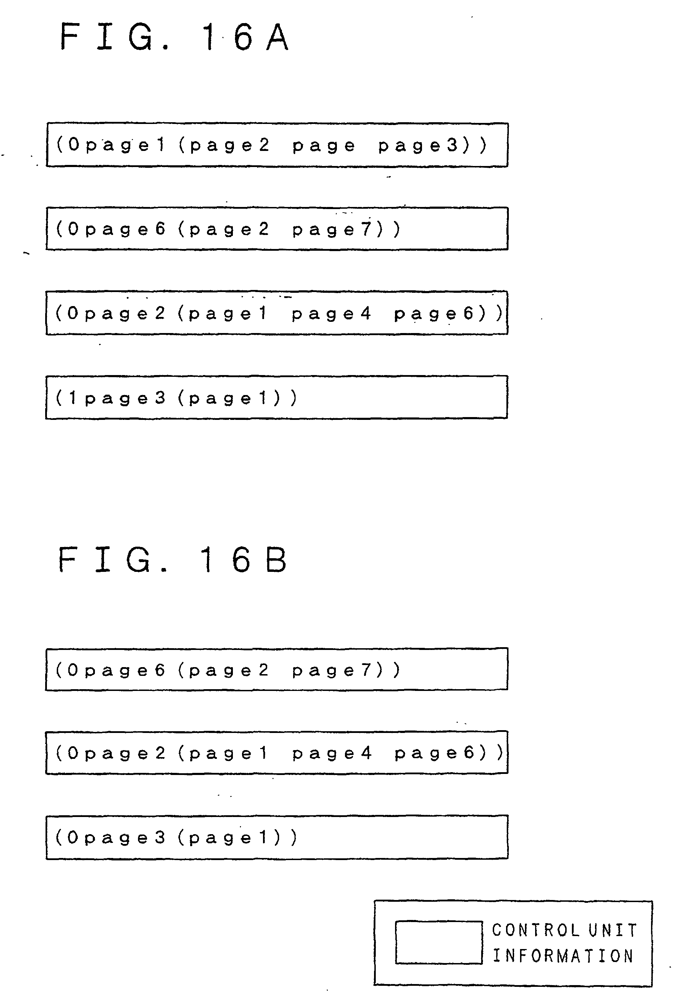

Description will be given below on a seventh embodiment referring to Fig. 15, Figs. 16A and 16B.

Fig. 15 is a block diagram showing an example of a hypertext document editing system according to the present embodiment. In this system, a node presence locking means 109 is added to the system shown in the first embodiment (Fig. 1).

In the flow of processing in the above system, using the locking information maintaining means 201, the locking means 101 guarantees that the content of the node to be locked is not changed and that it is present in the flow of processing shown in the first embodiment. In addition, locking is performed in the present embodiment in such manner that the change of the content of the node is allowed by the node presence locking means 109, and only its presence is guaranteed. The node presence locking means 109 also maintains the specified node information. Adequate node is allocated to each locking. Locking is allocated in such manner that the node to be edited in the control unit information is locked by the locking means 101 and that the node group to be locked is locked by the node presence locking means 109.

In the present embodiment, the node to be edited 501 and the node to be locked 502 in the control unit information 601 of the first embodiment are allocated to the locking in such manner that the node to be edited 501 is allocated to the locking by the locking means 101 and the node group to be locked 502 is allocated to the locking of the node presence locking means 109.

Figs. 16A and 16B represent a locking state in the hierarchical structure shown in Fig. 2. Fig. 16A represents a state of a control unit information group corresponding to page 1, page 6, page 2, and page 3 in case editing is requested in the order of page 1, page 6, page 2, and page 3. Here, it is supposed that the editing of page 1, page 6, and page 2 is the change of the contents, and that the editing of page 3 is its deletion. Fig. 16B represents a state of the control unit information group immediately after the completion of the editing of page 1 in Fig. 16A. For page 3, its presence is guaranteed by the node presence locking means 109 during the locking of page 1 because its editing is deletion, and by the guarantee of the presence, the number to represent its priority is turned to 0. After the completion of the editing of page 1, the number of the priority of page 3 is turned to 0.

As described above, according to the present embodiment, it is possible to guarantee the presence of a plurality of hypertext documents related to each other and to edit them at the same time, and its effect in practical application is high.

### (Eighth Embodiment)

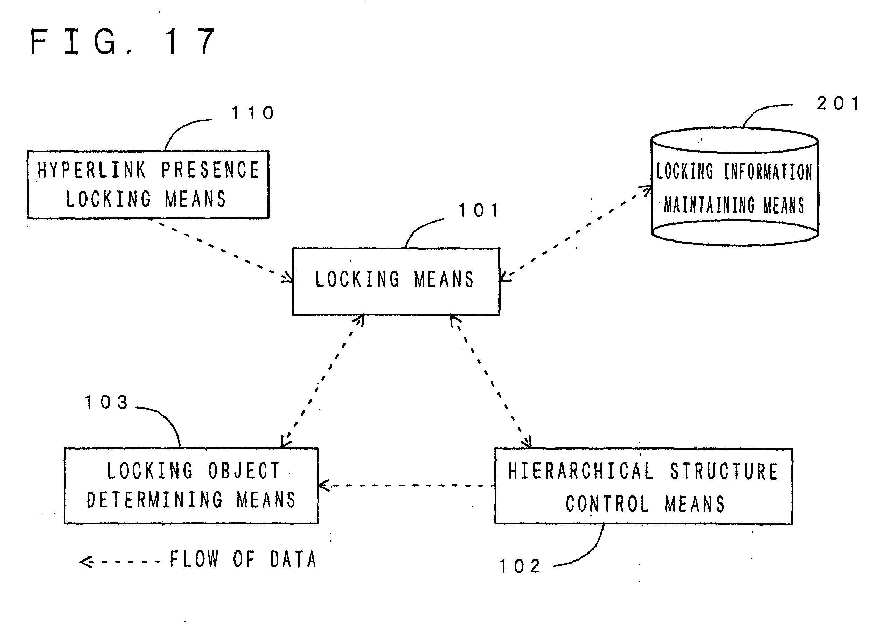

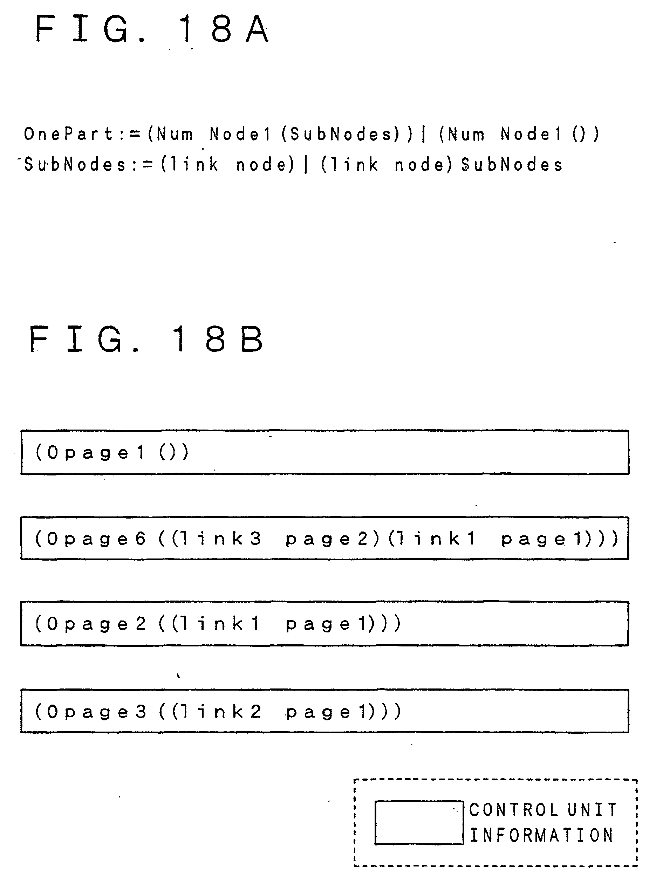

Description will be given below on an eighth embodiment referring to Fig. 17 and Figs. 18A and 18B.

Fig. 17 is a block diagram showing an example of a hypertext document editing system according to the present embodiment. In this system, a hyperlink locking means 110 is added to the system shown in the first embodiment (Fig. 1).

In the flow of processing in the above system, the locking means 101 performs locking using the locking information maintaining means 201 and guarantees that the content of the node to be locked is not changed and its presence is guaranteed in the flow of processing in the first embodiment. In addition, locking is performed in the present embodiment in such manner that a specified hyperlink in a specified node is guaranteed by the hyperlink locking means 110. The hyperlink locking means 110 also maintains the specified hyperlink information. Locking is allocated in such manner that locking of the node to be edited in the control unit information is performed by the locking means 101 and the hyperlink related to the node to be edited in the node included in the node group to be locked is locked by the node presence locking means 110. The hyperlinks related to the node to be edited include not only the directly related hyperlink but also the indirectly related hyperlink, which can be reached by following the hyperlink.

In the present embodiment, when the hyperlink is followed up via the shortest route from the ancestor node of the node to be edited to the node to be edited, it is defined as a hyperlink relating to the node to be edited. In case there is hyperlink relationship directed from the offspring node of the node to be edited toward the node to be edited, the hyperlink followed up via the shortest route may also be defined as the hyperlink relating to the node to be edited.

Fig. 18A represents context free grammar to describe each control unit information. One control unit information is expressed in an expanded system of OnePart. In the figure, a symbol "Num" is a terminal symbol to represent number of priority, a symbol "Node1" is a terminal symbol to represent a number to uniquely specify the node to be edited, a symbol "SubNodes" is a non-terminal symbol to represent a set of any number of the node groups to be locked relating to Nodel, a symbol "node" is a terminal symbol to represent a number to uniquely specify the node to be locked, and a symbol "link" is a terminal symbol to represent an identifier, which uniquely specifies the hyperlink included in the node to be locked and related with the node to be edited. Further, in the above grammar, a bracket opening symbol and a bracket closing symbol are used as terminal symbols. Control unit is expressed by terminal symbol string in accordance with the above grammar.

In the embodiment 5, the rule to determine the node group to be locked in the first embodiment is changed. In this respect, the embodiment 5 is referred in the explanations given below.

Fig. 18B represents an example where the hyperlink presence locking means 110 is introduced in the example shown in Figs. 12A and 12B in the fifth embodiment. Fig. 18B represents a state of a control unit information group corresponding to page 1, page 6, page 2, and page 3 in case editing is requested in the order of page 1, page 6, page 2, and page 3. Because all of the pages, for which editing is requested, differ from each other, it is possible to edit them at the same time. However, due to the locking of page 6, it-is not possible to delete the hyperlink 3 contained in page 2 in the editing of page 2. Similarly, it is not possible to delete link 1 and link 2 contained in page 1.

In the above example, it is also possible to use the embodiments 2, 3, 4, or 5.

As described above, in the present embodiment:
a locking function is incorporated, which gives restriction on link destination and link source of the specified document, and this could not be achieved in the prior art. The processing such as maintenance and acquisition of information of updating time of the partial information in a document could not be achieved in the prior art because only the reference is taken into consideration; and
it is possible to edit a plurality of hypertext documents related to each other while guaranteeing hyperlink relationship of the hypertext documents, and its effect in practical application is high.

### (Ninth Embodiment)

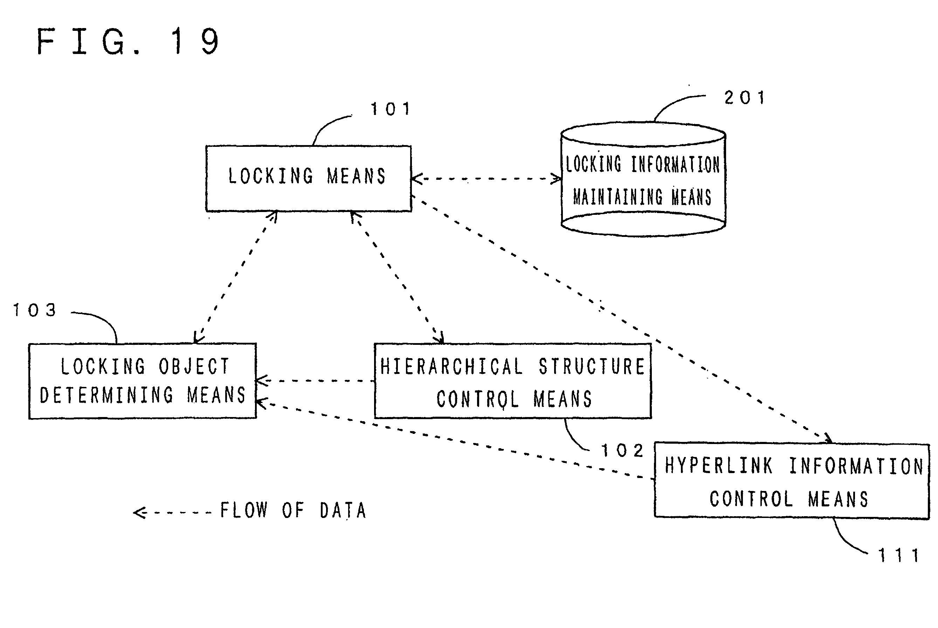

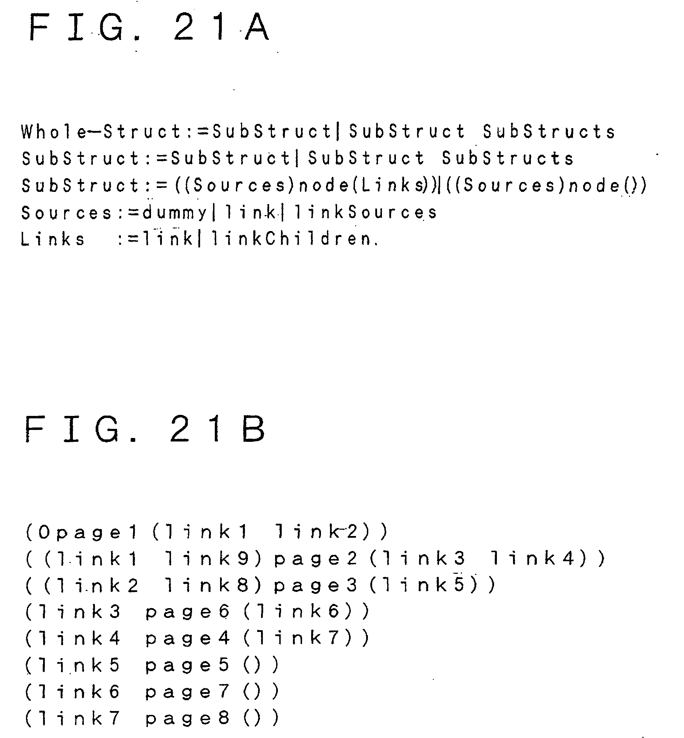

Description will be given now on a ninth embodiment referring to Fig. 19 to Figs. 21A and 21B.

Fig. 19 is a block diagram showing an example of a hypertext document editing system according to the present embodiment. In this system, a hyperlink information control means 111 is added to the system shown in the first embodiment (Fig. 1).

In the flow of processing in the above system, it is changed in the flow of processing shown in the first embodiment in such manner that, when the locking object determining means 102 determines the node group to be locked, it refers not only to the hierarchical structure control means 103 but also to the hyperlink information control means 111.

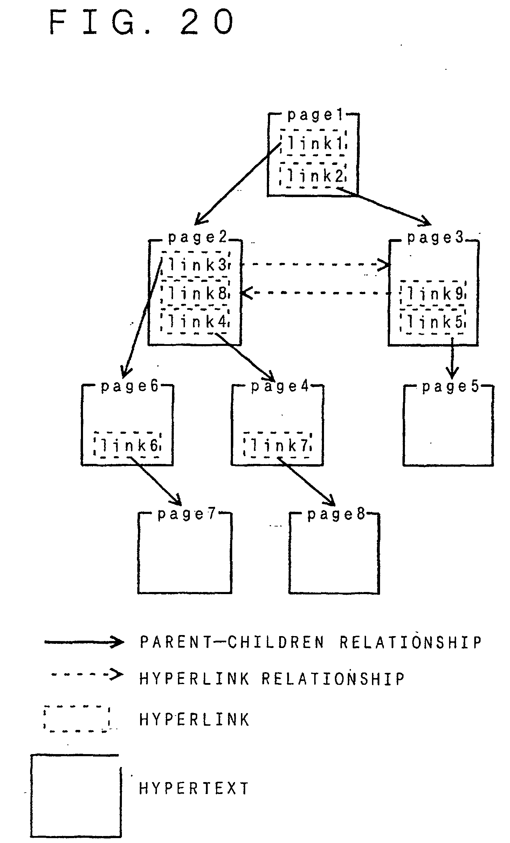

In Fig. 20, hyperlink relationship other than parent-children relationship is added to Fig. 2.

Fig. 21A represents context free grammar to describe structural information handled by the hyperlink control means 111. All of the structural information are expressed in an expanded system of Whole-Structs. In the figure, a symbol "SubStructs" is a non-terminal symbol to express a set of parent-children relationship of a node, a symbol "SubStruct" is a non-terminal symbol to express parent-children relationship of a node, a symbol "Sources" is a non-terminal symbol to express a set of hyperlinks at link sources, a symbol "node" is a terminal symbol to express a number, which uniquely specifies a node, a symbol "link" is a terminal symbol to express a number, which uniquely specifies a hyperlink, a symbol "dummy" is a terminal symbol to express a number, which shows that there is no link source, a symbol "Links" is a non-terminal symbol to express a set of hyperlinks, and a symbol "link" is a terminal symbol to express a number, which uniquely specifies hyperlink. Further, structure is expressed by a terminal symbol string in accordance with the above grammar. Also, it is assumed that the SubStruct corresponding to a specific node is present on one-to-one basis.

A structure between nodes in Fig. 20 is shown in Fig. 21B using the above context free grammar. It is supposed that a number expressing that there is no link source is 0.

As described above, according to the present embodiment, the presence of hypertext and the presence of hyperlink are guaranteed in the hyperlink relationship not limited to parent-children relationship, and it is possible to edit a plurality of hypertext documents at the same time, and its effect in practical application is high.

In each of the above embodiments, description has been given under the assumption that the so-called tree structure such as children node "group" to parent node is present in the order of parent-children in the hyperlink relationship between nodes, while the parent-children relationship does not have to be a tree structure, and it may be a link structure such as children node - children node "group" to parent node "group".

According to the present invention, it is possible to simultaneously and safely edit a plurality of nodes in a hypertext editing system.

Next, by defining a definite structure on the relationship between nodes in the hypertext editing system, it is possible to reduce the range of restriction on editing and to ensure safe editing.

This makes it possible to automate operations for preparation and control of WWW contents, which have been performed in the past according to the rules independently established by the users. Also, it is possible to automate simultaneous operation control in the field of operation, to which the users did not put consideration on simultaneous editing in the past. Also, it is possible to attain an effect to improve efficiency in the operation to prepare contents and in the operation to control by a plurality of users.

Next, by performing editing not only on node units but also on a portion in the node through limited editing of the nodes according to the structure of the hypertext document, it is possible to increase number of nodes which can be edited at the same time.

While the present invention has been described with reference to preferred embodiments, various variations and modifications may be made without departing from the scope of the invention.

## Claims

1. A hypertext editing system comprising:
a hierarchical structure control means (102) for controlling hyperlink relationship information where parent-children order is introduced to hyperlink relationship between node data in each node and nodes in a hypertext;
**characterised in that** the system includes:
a locking information maintaining means (201); a locking means (101) for locking a node group existing in a range to exert influence when a specific node is edited from said hierarchical structure control means
(102), the locking means (101) using the locking information maintaining means (201) and guaranteeing that the content of the node to be locked is not changed; and
a locking object determining means (103) for determining a range to exert influence.

2. A hypertext editing system according to claim 1, wherein a means (104) for determining a specific node and a children node group thereof as a range of locking object is added to the locking object determining means (103).

3. A hypertext editing system according to claim 1, wherein a means (105) for determining a specific node and a parent node thereof as a range of locking object is added to said locking object determining means (103).

4. A hypertext editing system according to claim 1, wherein a means (106) for determining a specific node and an offspring node group thereof as a range of locking object is added to said locking object determining means (103).

5. A hypertext editing system according to claim 1, wherein a means (107) for determining a specific node and an ancestor node group thereof as a range of locking object is added to said locking determining means (103).

6. A hypertext editing system according to claim 1, wherein a means (108) for changing priority order of locking as desired is added to said locking means (101).

7. A hypertext editing system according to claim 1, wherein a presence locking means (109) for guaranteeing the presence of a specific node is added to said locking means (101).

8. A hypertext editing system according to claim 1, wherein a hyperlink locking means (110) for limiting editing of a specific hyperlink is added to said locking means (101).

9. A hypertext editing system according to claim 1, wherein said hierarchical structure control means (102) is replaced with a hyperlink control means (111) for controlling all of hyperlink relationship information between node data in each node and nodes.

## Patentansprüche

1. Hypertexteditiersystem mit:
einem Mittel (102) zur Steuerung einer hierarchischen Struktur zur Steuerung von Hyperlinkbeziehungsinformation, wobei eine Eltern-Kinder-Reihenfolge in eine Hyperlinkbeziehung zwischen Knotendaten in jedem Knoten und Knoten in einem Hypertext eingeführt ist;
**dadurch gekennzeichnet,**
**dass** das System umfasst:
ein Mittel (201) zum Beibehalten von Sperrinformation;
ein Sperrmittel (101) zum Sperren einer Knotengruppe, die in einem Bereich existiert, um einen Einfluss, wenn ein spezifischer Knoten editiert wird, von dem Mittel (102) zur Steuerung von hierarchischer Struktur auszuüben, wobei das Sperrmittel (101) das Mittel (201) zur Beibehaltung von Sperrinformation verwendet und garantiert, dass der Inhalt des zu sperrenden Knotens nicht geändert wird; und
ein Mittel (103) zur Bestimmung eines Sperrobjektes, um einen Bereich zur Ausübung von Einfluss zu bestimmen.

2. Hypertexteditiersystem nach Anspruch 1,
wobei ein Mittel (104) zur Bestimmung eines spezifischen Knotens und einer Kinderknotengruppe desselben als ein Bereich eines Sperrobjektes dem Mittel (103) zur Bestimmung eines Sperrobjektes hinzugefügt ist.

3. Hypertexteditiersystem nach Anspruch 1,
wobei ein Mittel (105) zur Bestimmung eines spezifischen Knotens und eines Elternknotens desselben als ein Bereich eines Sperrobjektes dem Mittel (103) zur Bestimmung eines Sperrobjektes hinzugefügt ist.

4. Hypertexteditiersystem nach Anspruch 1,
wobei ein Mittel (106) zur Bestimmung eines spezifischen Knotens und einer Nachfolgerknotengruppe desselben als ein Bereich eines Sperrobjektes dem Mittel (103) zur Bestimmung eines Sperrobjektes hinzugefügt ist.

5. Hypertexteditiersystem nach Anspruch 1,
wobei ein Mittel (107) zur Bestimmung eines spezifischen Knotens und einer Vorgängerknotengruppe desselben als ein Bereich eines Sperrobjektes dem Mittel (103) zur Bestimmung einer Sperrung hinzugefügt ist.

6. Hypertexteditiersystem nach Anspruch 1,
wobei ein Mittel (108) zur Änderung einer Prioritätsreihenfolge eines Sperrens, wie gewünscht ist, dem Sperrmittel (101) hinzugefügt ist.

7. Hypertexteditiersystem nach Anspruch 1,
wobei ein Anwesenheitssperrmittel (109) zum Garantieren der Anwesenheit eines spezifischen Knotens dem Sperrmittel (101) hinzugefügt ist.

8. Hypertexteditiersystem nach Anspruch 1,
wobei ein Hyperlinksperrmittel (110) zur Begrenzung eines Editierens eines spezifischen Hyperlinks dem Sperrmittel (101) hinzugefügt ist.

9. Hypertexteditiersystem nach Anspruch 1,
wobei das Mittel (102) zur Steuerung von hierarchischer Struktur durch ein Hyperlinksteuermittel (111) zur Steuerung der gesamten Hyperlinkbeziehungsinformation zwischen Knotendaten in jedem Knoten und Knoten ersetzt ist.

## Revendications

1. Système d'édition d'hypertexte comprenant :
un moyen de commande de structure hiérarchique (102) destiné à commander des informations de relation d'hyperlien où un ordre parent-enfant est introduit pour la relation d'hyperlien entre des données de noeuds dans chaque noeud et des noeuds dans un hypertexte,
**caractérisé en ce que** le système comprend :
un moyen de conservation d'informations de verrouillage (201),
un moyen de verrouillage (101) destiné à verrouiller un groupe de noeuds existant dans une étendue afin d'exercer une influence lorsqu'un noeud spécifique est édité à partir dudit moyen de commande de structure hiérarchique (102), le moyen de verrouillage (101) utilisant le moyen de conservation d'informations de verrouillage (201) et garantissant que le contenu du noeud devant être verrouillé n'est pas modifié, et
un moyen de détermination de cible de verrouillage (103) destiné à déterminer une étendue pour exercer une influence.

2. Système d'édition d'hypertexte selon la revendication 1, dans lequel un moyen (104) destiné à déterminer un noeud spécifique et un groupe de noeuds enfants de celui-ci en tant qu'étendue de cible de verrouillage est ajouté au moyen de détermination de cible de verrouillage (103).

3. Système d'édition d'hypertexte selon la revendication 1, dans lequel un moyen (105) destiné à déterminer un noeud spécifique et un noeud parent de celui-ci en tant qu'étendue d'une cible de verrouillage est ajouté audit moyen de détermination de cible de verrouillage (103).

4. Système d'édition d'hypertexte selon la revendication 1, dans lequel un moyen (106) destiné à déterminer un noeud spécifique et un groupe de noeuds descendants de celui-ci en tant qu'étendue d'une cible de verrouillage est ajouté audit moyen de détermination de cible de verrouillage (103).

5. Système d'édition d'hypertexte selon la revendication 1, dans lequel un moyen (107) destiné à déterminer un noeud spécifique et un groupe de noeuds ancêtres de celui-ci en tant qu'étendue de la cible de verrouillage est ajouté au moyen de détermination de cible de verrouillage (103).

6. Système d'édition d'hypertexte selon la revendication 1, dans lequel un moyen (108) destiné à changer un ordre de priorité de verrouillage tel qu'il est souhaité est ajouté audit moyen de verrouillage (101).

7. Système d'édition d'hypertexte selon la revendication 1, dans lequel un moyen de verrouillage de présence (109) destiné à garantir la présence d'un noeud spécifique est ajouté audit moyen de verrouillage (101).

8. Système d'édition d'hypertexte selon la revendication 1, dans lequel un moyen de verrouillage d'hyperlien (110) destiné à limiter l'édition d'un hyperlien spécifique est ajouté audit moyen de verrouillage (101).

9. Système d'édition d'hypertexte selon la revendication 1, dans lequel ledit moyen de commande de structure hiérarchique (102) est remplacé par un moyen de commande d'hyperlien (111) destiné à commander toutes les informations de relation d'hyperlien entre des données de noeud dans chaque noeud et des noeuds.
